(19) Europäisches Patentamt / European Patent Office / Office européen des brevets

(11) **EP 4 016 499 A1**

(12) **EUROPEAN PATENT APPLICATION**

(43) Date of publication:
**22.06.2022 Bulletin 2022/25**

(21) Application number: **21208563.3**

(22) Date of filing: **16.11.2021**

(51) International Patent Classification (IPC):
**G08G 1/16** *(2006.01)*

(52) Cooperative Patent Classification (CPC):
**G08G 1/166; G08G 1/168**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.12.2020 KR 20200176771**

(71) Applicant: **Hyundai Mobis Co., Ltd.**
**Gangnam-gu**
**Seoul 06141 (KR)**

(72) Inventor: **KANG, Eun Seok**
**16919 Yongin-si, Gyeonggi-do (KR)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **REAR LATERAL SENSING SYSTEM AND METHOD OF VEHICLE**

(57) The present disclosure discloses a system and a method of rear lateral sensing of a vehicle for providing an accurate warning signal by transmitting a warning signal against an obstacle when the obstacle is present on a rear lateral side of the vehicle and accurately determining whether the obstacle completely exits from a warning area.

FIG. 1

EP 4 016 499 A1

**Description**

BACKGROUND

Technical Field

The present disclosure relates to a system and a method of rear lateral sensing of a vehicle for detecting a target vehicle entering the rear lateral side of the vehicle and transmitting a warning signal.

Description of the Related Art

The rear lateral warning system of the vehicle is a system for warning a driver when it is determined while the vehicle is driving that an obstacle is present in a blind spot located on the rear lateral side or that there is a risk of collision in the event of a lane change to the right or left with a vehicle approaching from behind at a high speed, thereby improving the convenience of the driver.

Specifically, such a rear lateral warning system includes a blind spot detection (BSD) system for notifying the driver when the obstacle is located in the blind spot on the rear lateral side and a lane change assist (LCA) system for determining, and warning of, a possibility of a collision in the event of a lane change of the vehicle with a vehicle approaching from the rear lateral side at a high speed. In particular, a rear lateral warning system that simultaneously implements the BSD and LCA functions to monitor a wide area and effectively warn the driver of risks has been developed in recent years.

In addition, there is a rear cross traffic alert (RCTA) that detects, and provides the driver with the information of, a target vehicle approaching from the right and left sides in the rear of the vehicle while the vehicle reverses. The RCTA transmits a warning signal when the target vehicle enters a warning area, and the warning signal must be maintained until the rear portion of the target vehicle completely exits from the warning area. However, the conventional RCTA targets the front portion of the target vehicle such that the warning signal is turned off even when the target vehicle has not completely passed by.

In addition, presence of other vehicles or obstacles are in the vicinity of the vehicle interferes with the identification of the target vehicle in the monitoring area so that a warning signal against the target vehicle entering the warning area may not be accurately generated.

The matters described above as the technical background are intended only for a better understanding of the background of the present disclosure and should not be taken as an acknowledgment that they pertain to the conventional art already known to those skilled in the art.

SUMMARY

The present disclosure is proposed to solve the problems described above, and an object of the present disclosure is to provide a system and a method of rear lateral sensing of a vehicle for providing an accurate warning signal by transmitting the warning signal against an obstacle when the obstacle is present on the rear lateral side of the vehicle and accurately determining whether the obstacle completely exits from a warning area.

In order to achieve the object described above, the rear lateral sensing system of the vehicle according to the present disclosure includes at least one sensor setting a monitoring area in a rear or on a rear lateral side of the vehicle and detecting an obstacle; a warning transmission device generating a warning signal when the at least one sensor detects the obstacle; a determination device calculating a generation time of the warning signal according to a tracked location of the obstacle; and a controller setting a determination target according to the tracked location of the obstacle, setting a determination area in the monitoring area based on the tracked location of the obstacle, and causing the determination device to adjust the generation time of the warning signal to last longer when the determination target is located in the determination area.

A gear controller checking the gear position of the vehicle is further included, and the at least one sensor detects the obstacle when the gear is shifted into an R position by the gear controller.

The controller sets the determination target based on the tracked location of the obstacle where the warning signal is turned off.

The controller adjusts the generation time of the warning signal when the lateral area does not satisfy a preset set area in the monitoring area of the at least one sensor.

The controller sets monitoring points based on the tracked location of the obstacle, taking a preset setting distance in the longitudinal and lateral directions into consideration.

The controller further receives information on the entry angle of the obstacle through the at least one sensor and adjusts the respective monitoring points based on the entry angle of the obstacle.

The controller sets a determination area with the determination lines defined based on the set monitoring points.

When the determination target is located in the determination area, the controller rechecks at fixed intervals whether the determination target remains in the determination area. The controller maintains an extended generation time of the warning signal when the determination target remains in the determination area and does not generate the warning signal when the determination target is no longer present in the determination area.

On the other hand, the rear lateral sensing method of the vehicle according to the present disclosure includes a sensing step of detecting an obstacle entering a monitoring area set in a rear or on a rear lateral side of the vehicle; a warning signal transmission step of generating the warning signal when the obstacle is detected in the sensing step; a determination step of calculating a generation time of the warning signal according to a tracked location of the obstacle; and a control step of setting a determination target according to the tracked location of the obstacle, setting a determination area in the monitoring area based on the tracked location of the obstacle, and adjusting the generation time of the warning signal to last longer when the determination target is located in the determination area.

The determination target is set based on the tracked location of the obstacle where the warning signal is turned off in the control step.

The generation time of the warning signal is adjusted when the lateral area does not satisfy a preset set area in the monitoring area in the control step.

The monitoring points are set based on the tracked location of the obstacle with the preset setting distance in the longitudinal and lateral directions taken into consideration in the control step.

The respective monitoring points are adjusted based on the entry angle of the obstacle in the control step.

The determination area is set with the determination lines defined based on the set monitoring points in the control step.

When the determination target is located in the determination area, whether the determination target remains in the determination area is rechecked at fixed intervals and the extended generation time of the warning signal is maintained when the determination target remains in the determination area and the warning signal is not generated when the determination target is no longer present in the determination area in the control step.

The rear lateral sensing system and method structured as described above provide an accurate warning signal by transmitting the warning signal against the obstacle when the obstacle is present on the rear lateral side of the vehicle and accurately determining whether the obstacle completely exits from the warning area.

## BRIEF DESCRIPTION OF THE DRAWINGS

FIG. 1 is a block diagram showing a rear lateral sensing system of a vehicle according to the present disclosure.
FIGS. 2 to 5 are diagrams for describing the rear lateral sensing system of the vehicle shown in FIG. 1.
FIG. 6 is a flowchart of a rear lateral sensing method of a vehicle according to the present disclosure.

## DETAILED DESCRIPTION

A system and a method of rear lateral sensing of a vehicle according to a preferred embodiment of the present disclosure will be described with reference to the accompanying diagrams in the following.

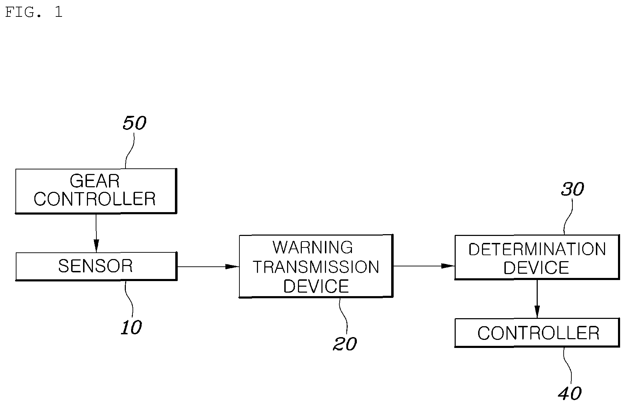

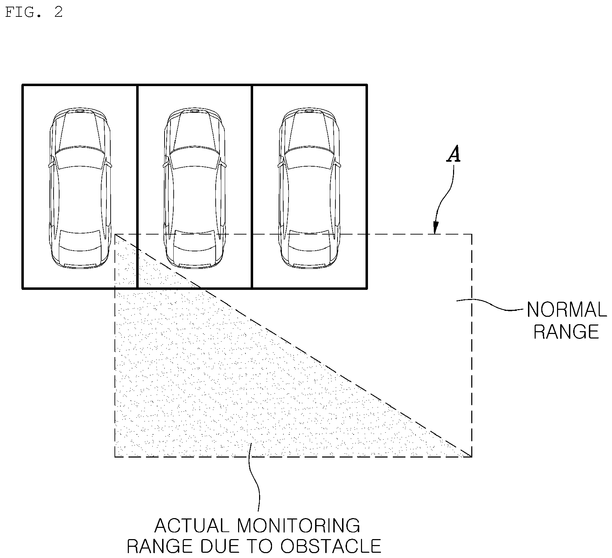

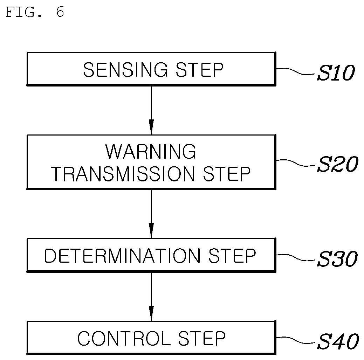

FIG. 1 is a block diagram of a rear lateral sensing system of a vehicle according to the present disclosure, FIGS. 2 to 5 are diagrams for describing the rear lateral sensing system of the vehicle shown in FIG. 1, and FIG. 6 is a flowchart of a rear lateral sensing method according to the present disclosure.

As shown in FIG. 1, the rear lateral sensing system of the vehicle according to the present disclosure includes at least one sensor 10 setting a monitoring area A in the rear or on a rear lateral side of the vehicle and detecting an obstacle; a warning transmission device 20 generating a warning signal when the sensor 10 detects the obstacle; a determination device 30 calculating a generation time of the warning signal according to a tracked location of the obstacle; and a controller 40 setting a determination target according to the tracked location of the obstacle, setting a determination area B in the monitoring area A based on the tracked location of the obstacle, and causing the determination device 30 to adjust the generation time of the warning signal to last longer when the determination target is located in the determination area B.

The sensor 10 sets the monitoring area A in the rear of the vehicle and detects the obstacle and may sense a relative distance to, and moving direction and speed of, the obstacle. The sensor 10 may include a radar sensor mounted in the vehicle, and another example may include a camera sensor, an ultrasonic sensor, a laser sensor, and the like.

In addition, a gear controller 50 checking a gear position of the vehicle may be further included, and the sensor 10 may detect the obstacle when the gear is shifted into an R position by the gear controller 50. The sensor 10 sets the monitoring area A in the rear or on the side of the vehicle and detects the obstacle when the gear is shifted into the R position, which is a reversing position so that the sensor 10 is not operated indiscriminately when there is no need to operate the sensor 10. In addition, the sensor 10 may be also selectively operated according to the reversing speed of the vehicle. The gear controller 50 may be an electric circuitry that executes instructions of software which thereby performs various functions described above.

In one exemplary embodiment of the present disclosure, a processor may perform various functions, which are described below, of the warning transmission device 20, the determination device 30, and the controller 40. The processor has an associated non-transitory memory storing software instructions which, when executed by the processor, provides the functionalities of the warning transmission device 20, the determination device 30, and the controller 40 of the rear lateral sensing system. Herein, the memory and the processor may be implemented as separate semiconductor circuits. Alternatively, the memory and the processor may be implemented as a single integrated semiconductor circuit. The processor may embody one or more processor(s). Each of the warning transmission device 20, the determination device 30, and the controller 40 may process signals transmitted between elements of the rear lateral sensing system.

The warning transmission device 20 generates a warning signal when the sensor 10 detects the obstacle. In an embodiment, the warning signal by the warning transmission device 20 may transmit a warning message against the obstacle to a driver through a warning light or warning sound.

The determination device 30 calculates the generation time of the warning signal according to the tracked location of the obstacle. That is, the determination device 30 sets the tracked location of the obstacle detected by the sensor 10, calculates the generation time of the warning signal according to the tracked location of the obstacle, and maintains the warning signal by the warning transmission device 20. In an embodiment, the obstacle is a target vehicle, and when the target vehicle enters the monitoring area A of the sensor 10, the determination device 30 tracks the location of the target vehicle and calculates the generation time of the warning signal according to the time the tracked location stays in the monitoring area A.

At this time, the determination device 30 calculates the generation time of the warning signal based on the tracked location of the obstacle as well as the length of the obstacle so that the warning signal is maintained until the obstacle completely passes through the monitoring area A.

However, when the obstacle is detected by the sensor 10, various surrounding elements may interfere with the generation of the warning signal according to the location of the obstacle.

Accordingly, in the present disclosure, the controller 40 sets a determination target according to the tracked location of the obstacle, sets the determination area B in the monitoring area A based on the tracked location of the obstacle, and causes the determination device 30 to adjust the generation time of the warning signal to last longer when the determination target is located in the determination area B.

In this way, the controller 40 sets the determination target according to the tracked location of the obstacle when the obstacle is present in the monitoring area A. Here, the tracked location of the obstacle may be the location information of the obstacle obtained by checking the correlation between the existing tracking information and the detected information on the obstacle, and the determination target may be any location from among the detected information obtained when the tracked location of the obstacle is calculated.

Specifically, the controller 40 may set the determination target based on the tracked location of the obstacle where the warning signal is turned off. That is, an object of the present disclosure is to provide an accurate warning signal by checking that the rear portion of the obstacle completely exits from the monitoring area A and the controller 40 sets the determination target based on the tracked location of the obstacle where the warning signal is turned off. Accordingly, the determination target may be set behind the tracked location of the obstacle in the moving direction of the obstacle.

On the other hand, the controller 40 controls to adjust the generation time of the warning signal when the lateral area does not satisfy the preset set area in the monitoring area A of the sensor 10.

Here, the set area may be preset in the controller 40 based on the monitoring area A of the sensor 10, and since it is difficult to accurately check the obstacle through the monitoring area A when the lateral area does not satisfy the set area in the monitoring area A, the generation time of the warning signal by the controller 40 is adjusted. For example, as shown in FIG. 2, when the set area is 60% of the normal range of 100% in the entire monitoring area A, the controller 40 adjusts the generation time of the warning signal if the monitoring area A is formed to be 60% or less of the normal range because of the obstacle.

Accordingly, when the monitoring area A of the sensor 10 satisfies the set area, the location and size of the obstacle entering the monitoring area A of the sensor 10 are accurately checked so that an accurate warning signal may be provided according to the tracked location of the obstacle even during the generation time of the warning signal as calculated by the determination device 30. However, when the monitoring area A of the sensor 10 does not satisfy the set area, checking the accurate location and size of the obstacle entering the monitoring area A is interfered with so that the generation time of the warning signal is adjusted according to the determination area B and the determination target set by the controller 40.

More specifically, the controller 40 may set the monitoring points based on the tracked location of the obstacle, taking into consideration the preset setting distance in the longitudinal and lateral directions. The respective monitoring points are denoted by P1, P2, P3, and P4 in the drawing.

That is, the controller 40 generates the monitoring points based on the tracked location of the obstacle detected by the sensor 10, taking into consideration the preset setting distance. Here, the setting distance preset in the controller 40 may be set in the longitudinal and lateral directions respectively. When it comes to the rear monitoring, the setting distance may be set longer in the lateral direction as the vehicle usually enters from the lateral direction.

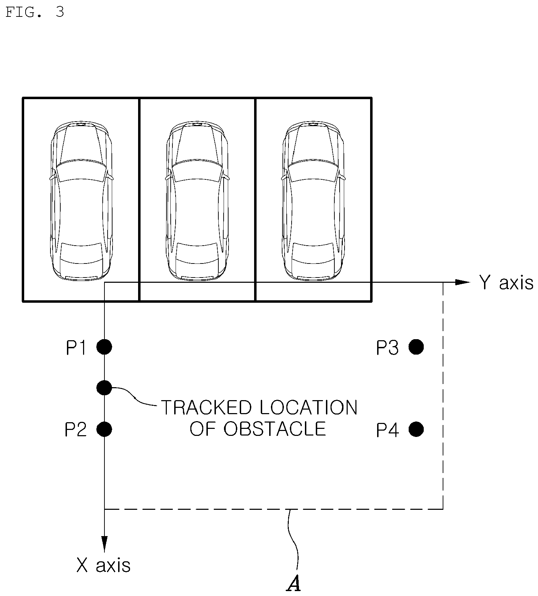

Accordingly, as can be seen in FIG. 3, the monitoring points of two elements are generated in the longitudinal direction around the tracked location of the obstacle and the monitoring points of two elements are generated in the lateral direction. The respective monitoring points are set at the respective coordinates based on the setting distance.

The respective monitoring points according to this may be set in the following manner:

Point1: (XPosTrailer-XGate,YPosTrailer),
Point2: (XPosTrailer+XGate,YPosTrailer),
Point3: (XPosTrailer-XGate,YPosTrailer+YGate), and
Point4: (XPosTrailer+XGate,YPosTrailer+YGate).

Here, XGate is a setting distance value in the longitudinal direction and YGate is a setting distance value in the lateral direction.

In addition, the controller 40 further receives information on the entry angle of the obstacle through the sensor 10 and adjusts the respective monitoring points based on the entry angle of the obstacle.

Since the vehicle does not drive only laterally when entering from the rear lateral side, information on the entry angle of the obstacle is further collected and the respective monitoring points are adjusted based on the entry angle of the obstacle.

Accordingly, the controller 40 adjusts the monitoring points using the entry angle information of the obstacle and the adjustment may be performed in the following manner:

$$\text{Point1:}\begin{bmatrix} XPosTrailer\_P1 \\ YPosTrailer\_P1 \end{bmatrix} = \begin{bmatrix} cos\delta & sin\delta \\ -sin\delta & cos\delta \end{bmatrix}\begin{bmatrix} XPosTrailer - XGate \\ YPosTrailer \end{bmatrix}$$

$$\text{Point2:}\begin{bmatrix} XPosTrailer\_P2 \\ YPosTrailer\_P2 \end{bmatrix} = \begin{bmatrix} cos\delta & sin\delta \\ -sin\delta & cos\delta \end{bmatrix}\begin{bmatrix} XPosTrailer + XGate \\ YPosTrailer \end{bmatrix}$$

$$\text{Point3:}\begin{bmatrix} XPosTrailer\_P3 \\ YPosTrailer\_P3 \end{bmatrix} = \begin{bmatrix} cos\delta & sin\delta \\ -sin\delta & cos\delta \end{bmatrix}\begin{bmatrix} XPosTrailer - XGate \\ YPosTrailer + YGate \end{bmatrix}$$

$$\text{Point4:}\begin{bmatrix} XPosTrailer\_P4 \\ YPosTrailer\_P4 \end{bmatrix} = \begin{bmatrix} cos\delta & sin\delta \\ -sin\delta & cos\delta \end{bmatrix}\begin{bmatrix} XPosTrailer + XGate \\ YPosTrailer + YGate \end{bmatrix}.$$

Here, the entry angle may be calculated by the following formula:

$$\delta = tan^{-1}\left(\frac{Vx}{Vy}\right)$$

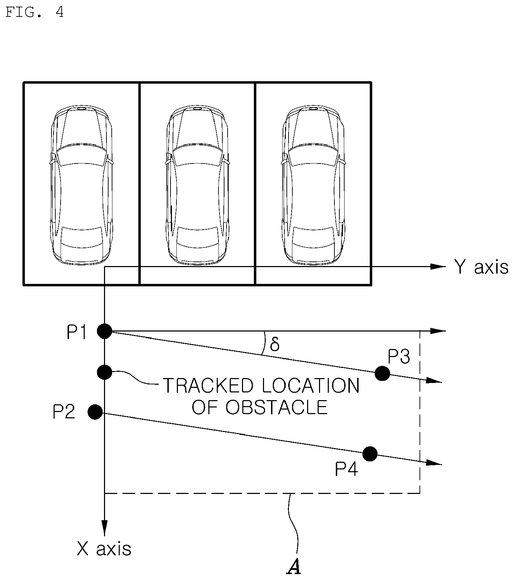

In this way, the controller 40 adjusts the respective monitoring points according to the entry angle of the obstacle so that the positions of the respective monitoring points are adjusted as shown in FIG. 4.

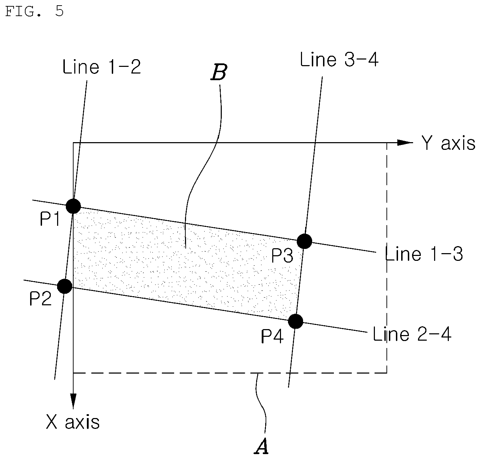

In addition, the controller 40 may set the determination area B with the determination lines defined based on the adjusted monitoring points. That is, as shown in FIG. 5, when the positions of P1, P2, P3, and P4 are adjusted according to the entry angle of the obstacle, the determination lines connecting the respective monitoring points are formed so that the determination area B may be set inwards.

Accordingly, the respective determination lines based on the respective monitoring points may be expressed by the following formulae:

Line1-2 : y = $a_{12}\chi+b_{12}$,
Line3-4 : y = $a_{34}\chi+b_{34}$,
Line1-3 : y = $a_{13}\chi+b_{13}$, and
Line2-4 : y = $a_{24}\chi+b_{24}$.

In this way, when the respective determination lines are formed, the determination area B may be set inwards of the respective determination lines based on this.

This allows the controller 40 to check whether the determination target is located in the determination area B and to check whether the obstacle is present on the rear lateral side of the vehicle. That is, the controller 40 checks whether the Y-axis location of the determination target has a greater value than the Line 1-2, whether Y-axis location of the determination target has smaller value than the Line 3-4, whether X-axis location of the determination target has a greater value than the Line 1-3, or whether the X-axis value of the determination target has a smaller value than the Line 2-4, which may be expressed in the following manner:

$$y_{pos,detect}(k,i) \;>\; a_{12}\chi_{pos,detect}(k,i)+b_{12}?$$

$$y_{pos,detect}(k,i) \;<\; a_{34}\chi_{pos,detect}(k,i)+b_{34}?$$

$$X_{pos,detect}(k,i) \;>\; (y_{pos,detect}(k,i)-b_{13})/a_{13}?$$

and

$$X_{pos,detect}(k,i) \;<\; (y_{pos,detect}(k,i)-b_{24})/a_{24}?$$

In this way, when the location of the determination target satisfies the respective determination lines, the controller 40 determines that an obstacle is present in the rear of the vehicle and adjusts the generation time of the warning signal to last longer. Accordingly, the warning transmission device 20 generates the warning signal for the warning signal generation time as calculated by the controller 40 so that the warning signal is maintained, thereby making it possible to recognize the obstacle in the rear of the vehicle and secure safety accordingly.

On the other hand, when the determination target is located in the determination area B, the controller 40 rechecks whether the determination target remains in the determination area B at fixed intervals. The controller 40 maintains the extended generation time of the warning signal when the determination target turns out to remain in the determination area B and does not generate the warning signal when the determination target is no longer present in the determination area B.

In this way, the controller 40 adjusts the warning signal generation time when the determination target is located in the determination area B and rechecks at fixed intervals whether the determination target remains in the determination area B so that the presence or absence of the obstacle in the rear of the vehicle is reliably checked. That is, the controller 40 checks at fixed intervals whether the determination target is located in the determination area B and generates the warning signal until the determination target is no longer present in the determination area B, thereby securing safety against the rear obstacle.

On the other hand, as shown in FIG. 6, a rear lateral sensing method of a vehicle according to the present disclosure includes a sensing step S10 of detecting an obstacle entering a monitoring area A set in the rear or on a side of the vehicle; a warning transmission step S20 of generating a warning signal when the obstacle is detected in the sensing step S10; a determination step S30 of calculating generation time of the warning signal according to a tracked location of the detected obstacle; and a control step S40 of setting a determination target according to a tracked location of the obstacle, setting a determination area B in the monitoring area A based on the tracked location of the obstacle, and adjusting the generation time of the warning signal to last longer when the determination target remains in the determination area B.

Here, the obstacle is detected when the gear is shifted into an R position in the sensing step S10.

This allows the driver to recognize the rear obstacle by generating a warning signal when the obstacle is detected in the rear of the vehicle and to accurately check the presence or absence of the obstacle by setting the determination target according to the tracked location of the obstacle and further determining whether the determination target is located in the determination area B.

Here, the determination target may be set based on the tracked location of the obstacle where the warning signal is turned off in the control step S40.

In addition, when the lateral area does not satisfy a preset set area in the monitoring area A, the generation time of the warning signal is adjusted in the control step S40.

On the other hand, monitoring points may be set based on the tracked location of the obstacle with the preset setting distance in the longitudinal and lateral directions taken into consideration in the control step S40. Here, the respective monitoring points are adjusted based on the entry angle of the obstacle in the step S40. In addition, the determination area B is set with the determination lines defined based on the set monitoring points in the control step S40.

In addition, when the determination target is located in the determination area B, whether the determination target remains in the determination area B is checked at fixed intervals in the control step S40. The extended generation time of the warning signal is maintained when the determination target remains in the determination area B, and the warning signal is not generated when the determination target is no longer present in the determination area B.

When the obstacle entering the rear of the vehicle is a large vehicle, this allows the generation time of the warning signal to last longer so as to maintain the warning signal until the large vehicle completely passes through the rear of the host vehicle. In addition, even when another vehicle is parked or an obstacle is present on the side of the host vehicle, the location of the vehicle entering the rear of the host vehicle is tracked and the warning signal is maintained until the vehicle entering the rear of the host vehicle completely passes by.

In this way, the present disclosure provides an accurate warning signal by transmitting the warning signal against the obstacle when the obstacle is present in the rear of the vehicle and accurately determining whether the obstacle completely exits from the warning area, thereby securing safety in the rear of the vehicle.

Specific embodiments of the present disclosure are illustrated and described above, but it will be self-evident to those skilled in the art that the present disclosure may be improved upon and modified in various ways within the scope not departing from the technical spirit of the present disclosure provided by the patent claims below.

**Claims**

1. A rear lateral sensing system of a vehicle, comprising:

   at least one sensor setting a monitoring area in a rear or on a rear lateral side of the vehicle and detecting an obstacle;
   a warning transmission device generating a warning signal when the at least one sensor detects the obstacle;
   a determination device calculating a generation time of the warning signal according to a tracked location of the obstacle; and
   a controller setting a determination target according to the tracked location of the obstacle, setting a determination area in the monitoring area based on the tracked location of the obstacle, and causing the determination device to adjust the generation time of the warning signal to last longer when the determination target is located in the determination area.

2. The rear lateral sensing system of the vehicle according to claim 1 further comprising a gear controller checking a gear position of the vehicle, wherein the at least one sensor detects the obstacle when the gear is shifted into an R position by the gear controller.

3. The rear lateral sensing system of the vehicle according to claim 1, wherein the controller sets a determination target based on the tracked location of the obstacle where the warning signal is turned off.

4. The rear lateral sensing system of the vehicle according to claim 1, wherein the controller adjusts the generation time of the warning signal when a lateral area does not satisfy a preset set area in the monitoring area of the at least one sensor.

5. The rear lateral sensing system of the vehicle according to claim 1, wherein the controller sets monitoring points based on the tracked location of the obstacle, taking a preset setting distance in the longitudinal and lateral directions into consideration.

6. The rear lateral sensing system of the vehicle according to claim 5, wherein the controller further receives information on an entry angle of the obstacle through the at least one sensor and adjusts the respective monitoring points based on the entry angle of the obstacle.

7. The rear lateral sensing system of the vehicle according to claim 5, wherein the controller sets a determination area with determination lines defined based on the set monitoring points.

8. The rear lateral sensing system of the vehicle according to claim 1, wherein, when the determination target is located in the determination area, the controller rechecks at fixed intervals whether the determination target remains in the determination area, maintains an extended generation time of the warning signal when the determination target remains in the determination area, and does not generate the warning signal when the determination target is no longer present in the determination area.

9. A rear lateral sensing method of a vehicle, comprising:

a sensing step of detecting an obstacle entering a monitoring area set in a rear or on a rear lateral side of the vehicle;
a warning transmission step of generating a warning signal when the obstacle is detected in the sensing step;
a determination step of calculating a generation time of the warning signal according to a tracked location of the detected obstacle; and
a control step of setting a determination target according to the tracked location of the obstacle, setting a determination area in the monitoring area based on the tracked location of the obstacle, and adjusting the generation time of the warning signal to last longer when the determination target remains in the determination area.

10. The rear lateral sensing method of the vehicle according to claim 9, wherein the determination target is set based on the tracked location of the obstacle where the warning signal is turned off in the control step.

11. The rear lateral sensing method of the vehicle according to claim 9, wherein the generation time of the warning signal is adjusted in the control step when the lateral area does not satisfy the preset set area in the sensing step.

12. The rear lateral sensing method of the vehicle according to claim 9, wherein monitoring points are set based on the tracked location of the obstacle with a preset setting distance in the longitudinal and lateral directions taken into consideration in the control step.

13. The rear lateral sensing method of the vehicle according to claim 12, wherein the respective monitoring points are adjusted based on the entry angle of the obstacle in the control step.

14. The rear lateral sensing method of the vehicle according to claim 13, wherein the determination area is set with determination lines defined based on the set monitoring points in the control step.

15. The rear lateral sensing method of the vehicle according to claim 9, wherein, when the determination target is located in the determination area, whether the determination target remains in the determination area is rechecked at fixed intervals and an extended generation time of the warning signal is maintained when the determination target remains in the determination area while the warning signal is not generated when the determination target is no longer present in the determination area in the control step.

FIG. 1

```
        50
         │
  ┌──────────────┐
  │    GEAR      │
  │  CONTROLLER  │
  └──────────────┘
         │
         ▼
  ┌──────────────┐         ┌──────────────┐         ┌──────────────┐
  │    SENSOR    │ ──────▶ │   WARNING    │ ──────▶ │ DETERMINATION│
  └──────────────┘         │ TRANSMISSION │         │    DEVICE    │
         │                 │    DEVICE    │         └──────────────┘
         10                └──────────────┘                │
                                  │                        ▼
                                  20               ┌──────────────┐
                                                   │  CONTROLLER  │
                                                   └──────────────┘
                                                          │
                                                          40
```

FIG. 2

A

NORMAL
RANGE

ACTUAL MONITORING
RANGE DUE TO OBSTACLE

FIG. 3

Y axis

P1 ●

● TRACKED LOCATION OF OBSTACLE

P3 ●

P2 ●

P4 ●

X axis

A

FIG. 4

FIG. 5

FIG. 6

```
┌─────────────────────────┐
│      SENSING STEP       │──── S10
└─────────────────────────┘
            │
            ▼
┌─────────────────────────┐
│        WARNING          │──── S20
│   TRANSMISSION STEP     │
└─────────────────────────┘
            │
            ▼
┌─────────────────────────┐
│   DETERMINATION STEP    │──── S30
└─────────────────────────┘
            │
            ▼
┌─────────────────────────┐
│      CONTROL STEP       │──── S40
└─────────────────────────┘
```

Europäisches
Patentamt

European
Patent Office

Office européen
des brevets

## EUROPEAN SEARCH REPORT

Application Number

**EP 21 20 8563**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 815 929 A1 (NISSAN MOTOR [JP]; VALEO RADAR SYSTEMS INC [US]) 24 December 2014 (2014-12-24) * paragraphs [0007], [0014], [0016], [0022] – [0030] * * figures 3, 6 * ----- | 1-15 | INV. G08G1/16 |
| X | EP 2 821 292 A1 (NISSAN MOTOR [JP]) 7 January 2015 (2015-01-07) * paragraph [0030] * * figures 7-11 * ----- | 1-15 | |

TECHNICAL FIELDS
SEARCHED      (IPC)

G08G

The present search report has been drawn up for all claims

| Place of search | Date of completion of the search | Examiner |
|---|---|---|
| The Hague | 28 April 2022 | Van den Bosch, I |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 20 8563

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2022

| Patent document cited in search report | | Publication date | Patent family member(s) | | Publication date |
|---|---|---|---|---|---|
| EP 2815929 | A1 | 24-12-2014 | CN | 104136281 A | 05-11-2014 |
| | | | EP | 2815929 A1 | 24-12-2014 |
| | | | JP | 5766308 B2 | 19-08-2015 |
| | | | JP WO2013122210 A1 | 18-05-2015 |
| | | | US | 2015015383 A1 | 15-01-2015 |
| | | | WO | 2013122210 A1 | 22-08-2013 |
| EP 2821292 | A1 | 07-01-2015 | CN | 104136282 A | 05-11-2014 |
| | | | EP | 2821292 A1 | 07-01-2015 |
| | | | JP | 5794381 B2 | 14-10-2015 |
| | | | JP WO2013129184 A1 | 30-07-2015 |
| | | | US | 2015015714 A1 | 15-01-2015 |
| | | | WO | 2013129184 A1 | 06-09-2013 |

EPO FORM P0459

For more details about this annex : see Official Journal of the European Patent Office, No. 12/82